# EUROPÄISCHE PATENTANMELDUNG

(11) **EP 1 484 098 A1**
(43) Veröffentlichungstag der Anmeldung: **08.12.2004**
(21) Anmeldenummer: 04102134.6
(22) Anmeldetag: 14.05.2004
(51) Int. Cl.: B01D 35/30, B01D 27/08

(54) **Flüssigkeitsfilter, insbesondere für Kraftstoff**

(30) Priorität: 07.06.2003 DE 10325964
(71) Anmelder: MANN+HUMMEL GmbH, 71638 Ludwigsburg (DE)
(72) Erfinder: Rösgen, André, 73630, Remshalden (DE); Scholz, Steffen, 71679, Asperg (DE)

(57) **Zusammenfassung**

Ein Flüssigkeitsfilter weist ein topfartiges Filtergehäuse auf, in dem ein Filterelement aufgenommen ist, sowie einen Gehäusedeckel, wobei Filtergehäuse und Gehäusedeckel einen umlaufenden Gehäusefalz bzw. Deckelfalz besitzen. Bei geschlossenem Gehäusedeckel ist zwischen dem Gehäusefalz und dem Deckelfalz ein Dichtring eingebracht. Die beiden Falze umgreifen den Dichtring jeweils an zwei Seiten, wobei die Falze zueinander komplementär ausgebildet sind.

## Beschreibung

Die Erfindung bezieht sich auf einen Flüssigkeitsfilter, insbesondere einen Kraftstoff-Flüssigkeitsfilter, nach dem Oberbegriff des Anspruches 1.

Ein derartiger Flüssigkeitsfilter wird in der Druckschrift US 3 513 977 beschrieben. Der Flüssigkeitsfilter umfasst ein topfähnliches Gehäuse zur Aufnahme der Flüssigkeit sowie einen Gehäusedeckel, wobei im stirnseitigen Bereich des Gehäuses ein umlaufender Falz ausgebildet ist, welcher als radial nach außen abgebogener Endabschnitt des zylindrischen Gehäuses ausgebildet ist, und wobei im Gehäusedeckel ein korrespondierender Falz ausgebildet ist, welcher ebenfalls einen radial umgebogenen Abschnitt besitzt. Die beiden Falze am Gehäuse und am Gehäusedeckel wirken zusammen und schließen bei geschlossenem Deckel einen zwischenliegenden Dichtring mit etwa dreieckförmigem Querschnitt ein. Der Deckelfalz begrenzt zwei Seiten des Dichtringes im Bereich seines umgeschlagenen Falzes, wohingegen der Gehäusefalz nur an einer Seite des Dichtringes anliegt. Bei zu geringer Querschnittsgröße des Dichtringes, beispielsweise durch Schrumpfung hervorgerufen, können sich jedoch Dichtigkeitsprobleme einstellen, da die winklig aufeinander gerichteten Falze unmittelbar aufeinander treffen können, so dass über die Falze keine Schließkraft auf den Dichtring übertragbar ist.

Der Erfindung liegt das Problem zugrunde, einen Flüssigkeitsfilter, der einen verschließbaren Gehäusedeckel aufweist, auch über einen langen Betriebszeitraum flüssigkeitsdicht auszubilden.

Dieses Problem wird erfindungsgemäß mit den Merkmalen des Anspruches 1 gelöst. Die Unteransprüche geben zweckmäßige Weiterbildungen an.

Bei dem erfindungsgemäßen Flüssigkeitsfilter umgreifen die beiden Falze am Filtergehäuse und am Gehäusedeckel den Dichtring jeweils an zwei Seiten. Außerdem ist vorgesehen, dass die beiden Falze komplementär zueinander ausgebildet sind. Diese Ausführung weist den Vorteil auf, dass gegebenenfalls eine allseitige Umschließung des Dichtringes möglich ist, wobei der zwischen den Falzen liegende Dichtring gleichmäßig von den beiden Falzen mit einer Klemmkraft beaufschlagt wird, insbesondere über die Querschnittsfläche des Dichtringes mit gleichmäßiger Kraft gehalten wird, so dass der Dichtring über seinen Querschnitt mit einer gleich bleibenden Kraft beaufschlagt wird. Auf den Dichtring wirkende Kraftspitzen, die bei aus dem Stand der Technik bekannten Ausführungen mit dreieckförmig zulaufenden Falzen auftreten können und zu einer erhöhten Materialbelastung des Dichtringes führen, werden hierdurch vermieden, so dass bei der erfindungsgemäßen Ausführung die Lebens- bzw. Betriebsdauer erhöht und das Risiko einer Undichtigkeit vermindert ist.

Ein zusätzlicher Vorteil ist darin zu sehen, dass die beiden Falze aufgrund ihrer komplementären Ausführung in einfacher Weise mit gleichartigen Werkzeugen herzustellen sind.

Gemäß einer ersten vorteilhaften Weiterbildung umgreifen die Falze am Filtergehäuse und am Gehäusedeckel den Dichtring an jeweils gegenüberliegenden Seiten. In Verbindung mit der komplementären Ausführung der Falze ergibt sich hierdurch über den Querschnitt gesehen ein vollständig umseitiges Einschließen des Dichtringes, so dass der Dichtring unter der Einwirkung der Klemmkraft in keiner Raumrichtung entweichen kann. Außerdem wird zusätzlich zu der axialen Klemmkraft auch eine radiale Klemmkraftkomponente erzeugt.

Gemäß einer zweiten vorteilhaften Weiterbildung ist vorgesehen, dass der Dichtring von den Falzen am Filtergehäuse und am Gehäusedeckel an zwei gegenüberliegenden Seiten sowie an einer gemeinsamen Seite umgriffen ist. In dieser Ausführung, die sich insbesondere bei einer spiegelbildlichen Ausbildung der beiden Falze ergibt, kann der Dichtring auf seiner radialen Außenseite von den beiden Falzen umschlossen sein, wohingegen an der radial innen liegenden Seite des Dichtringes ein zusätzlicher Dichtungsgegenhalter zum Aufnehmen des Gegendruckes in Radialrichtung vorgesehen sein kann. In dieser Ausführung ist die radial außen liegende Seite des Dichtringes praktisch vollständig von den beiden Falzen abgedeckt.

Die Klemmkraft, welche die beiden Falze zusammenhält, kann von einer Schelle aufgebracht werden, welche die beiden Falze umschließt und beispielsweise von einem Spannband in ihrer Schließstellung gehalten sein kann.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch einen Flüssigkeitsfilter, dargestellt im oberen Abschnitt eines Filtergehäuses mit aufgesetztem Gehäusedeckel, wobei im radial außen liegenden Randbereich das Gehäuse und der Deckel jeweils einen zusammenwirkenden Falz aufweisen und zwischen den beiden Falzen ein Dichtring eingesetzt ist,
- Fig. 1a: eine Ausschnittvergrößerung aus dem Falzbereich gemäß dem Detail Ia aus Fig. 1,
- Fig. 2: eine Fig. 1 entsprechende Darstellung eines Flüssigkeitsfilters in einer alternativen Ausführung,
- Fig. 2a: das Detail IIa aus Fig. 2 in einer vergrößerten Darstellung.

In den Figuren sind gleiche Bauteile mit gleichen Bezugszeichen versehen.

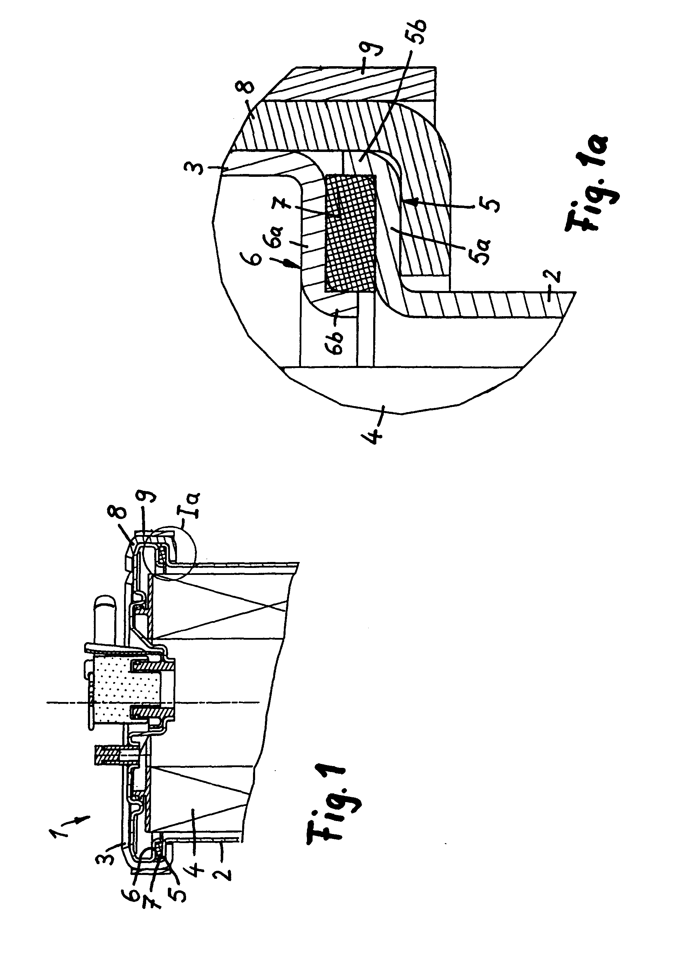

Bei dem in Fig. 1 dargestellten Flüssigkeitsfilter handelt es sich insbesondere um einen Kraftstofffilter, welcher in Kraftfahrzeugen zur Filterung des Kraftstoffes eingesetzt wird. Der Flüssigkeitsfilter 1 umfasst ein Filtergehäuse 2, welches insbesondere zylindrisch bzw. topfförmig ausgebildet ist, sowie einen Gehäusedeckel 3, welcher auf die offene Seite des Filtergehäuses 2 aufsetzbar und mit diesem zu verschließen ist. In dem Filtergehäuse 2 ist ein Filterelement 4 angeordnet, welches insbesondere radial von der zu reinigenden Flüssigkeit durchströmt wird. Filtergehäuse 2 und Gehäusedeckel 3 bestehen zweckmäßig aus Metall, insbesondere aus einem Leichtmetall wie zum Beispiel Blech oder Aluminium. Zur Verbesserung der Resistenz gegenüber der zu reinigenden Flüssigkeit kann die Oberfläche von Filtergehäuse und Gehäusedeckel beschichtet sein.

Um eine flüssigkeitsdichte und zugleich konstruktiv einfache Schließverbindung zwischen Filtergehäuse 2 und Gehäusedeckel 3 zu erreichen, die auch über einen langen Betriebszeitraum funktionsfähig bleibt, besitzt das Filtergehäuse 2 im Bereich seiner offenen Stirnseite auf der radial außenliegenden Seite seiner Wandung einen Gehäusefalz 5 und der Gehäusedeckel 3 einen korrespondierenden radial außen liegenden Deckelfalz 6, zwischen denen in Schließposition ein umlaufender Dichtring 7 eingeschlossen ist. Wie Fig. 1 in Verbindung mit Fig. 1a zu entnehmen, sind die beiden Falze 5 und 6 komplementär zueinander ausgebildet und weisen jeweils einen horizontal bzw. radial verlaufenden Abschnitt 5a, 6a sowie einen sich hieran anschließenden vertikal bzw. axial verlaufenden Abschnitt 5b bzw. 6b auf. Der Dichtring 7 besitzt im Ausführungsbeispiel einen rechteckförmigen Querschnitt, wobei die Mantelfläche des Dichtringes an zwei Seiten von den Abschnitten 5a und 5b des Gehäusefalzes 5 und an den zwei gegenüberliegenden Seiten von den Abschnitten 6a und 6b des Deckelfalzes 6 umgriffen wird. Auf diese Weise wird der Dichtring 7 allseitig von den Abschnitten der Falze 5 und 6 eingeschlossen, was dazu führt, dass eine axiale Klemmkraft, welche zwischen Gehäuse 2 und Deckel 3 wirkt und aufgrund der Elastizität des Dichtringes 7 auch zu einer radialen Aufweitung des Dichtringes 7 führt, in eine zusätzliche, radiale Klemmkraft umgesetzt wird, die jedoch aufgrund der radial den Dichtring übergreifenden Abschnitte 5b und 6b der Falze 5 bzw. 6 von diesen aufgenommen bzw. abgestützt wird. Auf diese Weise kann mit einem verhältnismäßig geringen konstruktiven Aufwand bei einer axial aufgebrachten Klemmkraft der Dichtring sowohl axial als auch radial im zwischenliegenden Raum zwischen den Falzen 5 und 6 eingeklemmt werden. Hierdurch wird die Dichtwirkung verbessert.

Die Falze 5 und 6 sind punktsymmetrisch zueinander ausgerichtet. Die Abschnitte 5a und 6a bzw. 5b und 6b liegen parallel zueinander, wodurch der Dichtring 7 sowohl in Radialrichtung als auch in Achsrichtung jeweils gleichmäßig mit einer axialen bzw. radialen Klemmkraft beaufschlagt wird. Hierdurch können auf den Dichtring wirkende Kraftspitzen vermieden werden, die das Dichtringmaterial schädigen können.

Die Klemmkraft wird von einer Schelle 8 erzeugt, die beispielsweise als Formstahlschelle ausgeführt ist und den äußeren, radialen Rand sowohl des Gehäusefalzes 5 als auch des Deckelfalzes 6 umgreift und bandförmig um die umlaufenden Falze gelegt ist. Die Schelle 8 schließt die Falze 5 und 6 sowohl am radial außen liegenden Umfang als auch axial ein. Über ein am Außenumfang der Schelle 8 verlaufendes Spannband 9 wird die Schelle in ihrer die Falze schließenden Position gehalten.

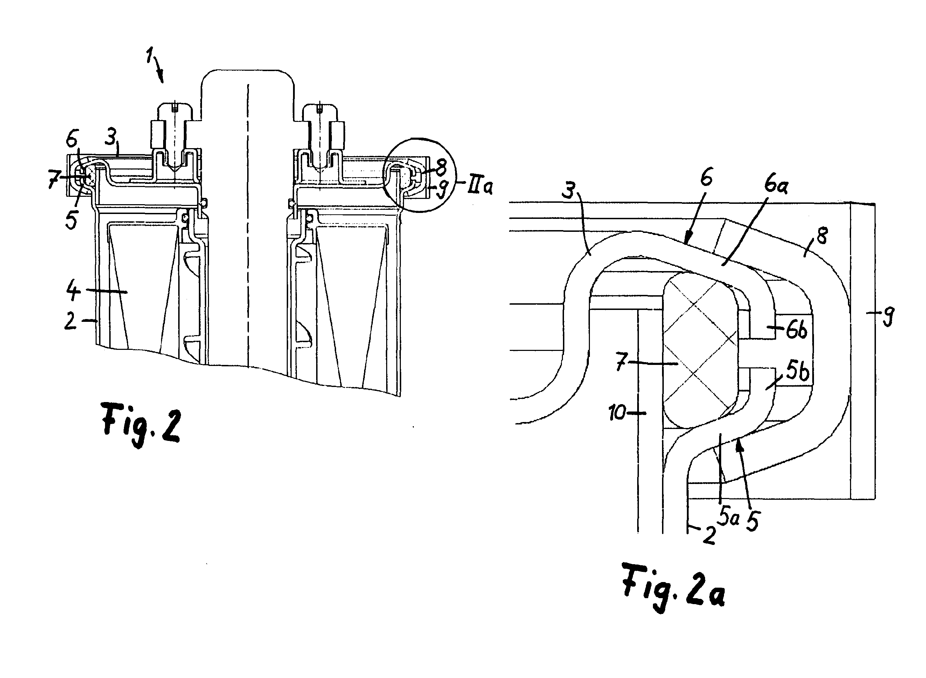

Bei dem in den Fig. 2 und 2a dargestellten, alternativen Flüssigkeitsfilter 1 sind die beiden Falze 5 und 6 am Gehäuse 2 bzw. am Deckel 3 bezüglich einer Spiegelebene symmetrisch angeordnet. Der Dichtring 7 weist einen näherungsweise trapezförmigen Querschnitt mit stark abgerundeten Ecken auf, wobei die kürzere Trapezseite die radiale Außenseite und die längere Trapezseite die radiale Innenseite des Dichtringes bildet. Jeder Falz 5 bzw. 6 umschließt den Dichtring 7 mit dem Abschnitt 5a bzw. 6a an gegenüberliegenden axialen Schmalseiten. Die äußere Abschnitt 5b bzw. 6b jedes Falzes 5 bzw. 6 liegt auf der gleichen, radial außen liegenden Seite des Dichtringes 7. Auf der radial innen liegenden Seite stützt sich der Dichtring 7 mit seiner längeren Trapezseite an einem Dichtungsgegenhalter 10 ab, welcher insbesondere fest mit der Wandung des Filtergehäuses 2 verbunden ist, gegebenenfalls auch einen Teil der Wandung des Filtergehäuses bilden kann. Die einander zugewandten Stirnseiten der äußeren Abschnitte 5b und 6b der Falze 5 bzw. 6 liegen auf Abstand zueinander, so dass eine kleine, zwischenliegende Lücke gebildet ist. Gegebenenfalls können die Stirnseiten der Abschnitte 5b und 6b aber auch durch ein Zusammenpressen des Dichtringes 7 unmittelbar berührend aneinander liegen.

Die längeren, den äußeren Abschnitten 5b und 6b vorgelagerten Abschnitte 5a und 6a der Falze verlaufen näherungsweise radial, schließen jedoch gegenüber einer Horizontalen einen Winkel ein, der im Ausführungsbeispiel etwa 30° beträgt, und nähern sich zur radialen Außenseite hin einander an. Es sind abweichende Winkel denkbar; gegebenenfalls verlaufen die Abschnitte 5a und 6a auch horizontal.

## Patentansprüche

1. Flüssigkeitsfilter (1), insbesondere Kraftstoff-Flüssigkeitsfilter, mit einem topfartigen Filtergehäuse (2), in dem ein Filterelement (4) aufgenommen ist, und einem Gehäusedeckel (3), wobei Filtergehäuse (2) und Gehäusedeckel (3) einen umlaufenden Gehäusefalz (5) bzw. Deckelfalz (6) aufweisen und bei geschlossenem Gehäusedeckel (3) zwischen dem Gehäusefalz (5) und dem Deckelfalz (6) ein Dichtring (7) eingebracht ist, der von einem der Falze (5, 6) an zwei Seiten umgriffen ist,
**dadurch gekennzeichnet,**
**dass** beide Falze (5, 6) den Dichtring (7) jeweils an zwei Seiten umgreifen und die beiden Falze (5, 6) zueinander komplementär ausgebildet sind.

2. Flüssigkeitsfilter (1) nach Anspruch 1,
**dadurch gekennzeichnet,**
**dass** der Dichtring (7) von den Falzen (5, 6) an jeweils gegenüberliegenden Seiten umgriffen ist.

3. Flüssigkeitsfilter (1) nach Anspruch 1,
**dadurch gekennzeichnet,**
**dass** der Dichtring (7) von den Falzen (5, 6) an zwei gegenüberliegenden Seiten und an einer gemeinsamen Seite umgriffen ist.

4. Flüssigkeitsfilter (1) nach einem der Ansprüche 1 bis 3,
**dadurch gekennzeichnet,**
**dass** der Dichtring (7) einen viereckigen Querschnitt aufweist.

5. Flüssigkeitsfilter (1) nach Anspruch 4,
**dadurch gekennzeichnet,**
**dass** der Dichtring (7) einen trapezförmigen Querschnitt aufweist.

6. Flüssigkeitsfilter (1) nach einem der Ansprüche 1 bis 5,
**dadurch gekennzeichnet,**
**dass** die beiden Falze (5, 6) von einer Schelle (8) zusammengehalten sind.
